# EUROPÄISCHE PATENTANMELDUNG

(11) **EP 0 809 063 A2**
(43) Veröffentlichungstag der Anmeldung: **26.11.1997**
(21) Anmeldenummer: 97107419.0
(22) Anmeldetag: 06.05.1997
(51) Int. Cl.: F16L 37/40, F16L 37/28

(54) **Kupplungs-Vorrichtung zur Verbindung von Leitungen**

(30) Priorität: 23.05.1996 DE 19620715
(71) Anmelder: GARDENA Kress + Kastner GmbH, D-89079 Ulm (DE)
(72) Erfinder: Kaupp, Rainer, 89143 Blaubeuren-Asch (DE)
(74) Vertreter: Patentanwälte Ruff, Beier, Schöndorf und Mütschele

(57) **Zusammenfassung**

Eine Schlauch- bzw. Schnellverschluß-Kupplung (1) weist unmittelbar hinter der Verriegelungshülse (8) einen Drehknopf (11, 21) auf, mit welchem das Küken (18) eines Ventiles (9) und ein Sperrglied (20) für die Hülse (8) gemeinsam mit einer Hand gedreht werden können, während die Kupplung (1) mit der anderen Hand dahinter als Griff (41) umklammert und festgehalten werden kann.

## Beschreibung

Die Erfindung betrifft eine Kupplungs-Vorrichtung, mit welcher die Enden zweier Leitungen miteinander verbunden werden können, insbesondere dann, wenn die Vorrichtung an ihrem Ende mit einem Gegenstück, wie einem Nippel, zum Verbinden mit der Kupplungs-Vorrichtung fest verbunden ist. Die Kupplungs-Vorrichtung bildet dann mit dem Gegenstück eine Schnellverschluß-Kupplung, bei der zum Verbinden die beiden Kupplungsstücke nur axial zusammengesteckt werden müssen und eine Verriegelung dabei von selbst einrastet. Zum Entriegeln kann eine einzige, gleichgerichtete Bewegung eines Riegelkörpers genügen, beispielsweise eine lineare bzw. axiale oder eine drehende Bewegung, welche manuell ausgeführt werden kann.

Um ein versehentliches Entriegeln der Verriegelung zu verhindern bzw. das Entkuppeln des Gegenstückes unmöglich zu machen, ist zweckmäßig eine Sperre vorgesehen, die gesondert vom Riegelkörper manuell durch eine Bewegung betätigbar sein kann, welche von der Bewegung des Riegelkörpers oder von deren Richtung abweicht.

Um den Durchfluß des Mediums, wie eines Fluids, einer Flüssigkeit, von Wasser oder eines anderen Energieträgers für den Antrieb beispielsweise einer Beregnungsvorrichtung o. dgl., steuern zu können, ist eine Steuereinrichtung vorgesehen. Auch diese kann manuell betätigbar sein, z.B. wie anhand der Sperre erläutert. Mit der Steuereinrichtung kann die Durchflußmenge je Zeiteinheit zwischen einem Maximalwert und einem Minimalwert in kleinen Schritten verändert oder vollständig unterbrochen werden. Ist das Medium ein Fluid, so bildet die Steuereinrichtung ein Ventil, das in jedem Einstellzustand zwischen den genannten Werten gesichert und genutzt werden kann. Dadurch ist es möglich, die Vorrichtung als Spritzdüse einzusetzen oder mit einem mit dem Gegenstück versehenen Aufsatz zu verbinden, welcher eine Spritzdüse, eine Waschbürste, ein Regner oder ein anderes Gartengerät sein kann. Mit dem Ventil ist die von der Vorrichtung abgegebene Medienmenge beliebig zu regulieren.

Die Steuervorrichtung kann zwar mit der Sperre so zusammenwirken, daß das Ventil der Vorrichtung über einen Stellweg von etwa 80° geöffnet wird, jedoch ist dann eine selbstsichernde und genaue Einstellung des Durchflusses nicht möglich, wenn eine die Öffnungsbewegung übertragende Steuerkurve eine zu große Steigung hat bzw. nur dazu dient, einen ringförmigen Konusspalt des Durchlasses in seiner Spaltweite zu verändern. Der ringförmige Mediendurchlass kann leicht verstopft werden. Zwar kann die Handhabe im hinteren Bereich der Vorrichtung so angeordnet sein, daß diese zum Halten vor der Steuerhandhabe an der Verriegelungs-Handhabe mit der Hand zu umklammern ist, jedoch ist dann die Steuerhandhabe verhältnismäßig schwer zugänglich, eine versehentliche Betätigung der Verriegelungs-Handhabe möglich und auch eine unnötig überlange Ausbildung der Verriegelungs-Handhabe erforderlich, um sie mit der die Handhabe tragenden Welle gegen die Entriegelungs-Bewegung zu sperren. Dennoch können je nach den Erfordernissen alle diese Ausbildungen erfindungsgemäß vorgesehen sein.

Der Erfindung liegt auch die Aufgabe zugrunde, eine Kupplungs-Vorrichtung zu schaffen, bei welcher Nachteile bekannter Ausbildungen sowie ggf. der beschriebenen Art vermieden sind und die insbesondere bei kompakter und einfacher Bauweise eine sehr präzise manuelle Steuerung unterschiedlicher Funktionen zuläßt.

Erfindungsgemäß ist die Steuereinrichtung so ausgebildet, daß die Durchflußmenge je Zeiteinheit über annähernd ihren gesamten Stellweg im wesentlichen stetig verändert sowie in jeder Einstellung gesichert werden kann, insbesondere ohne daß eine formschlüssige oder ähnliche Festsetzung bzw. Rastung erforderlich ist. Dies kann z.B. dadurch erzielt werden, daß die Steuer-Handhabe spiel- bzw. übersetzungsfrei auf das zugehörige Durchfluß-Steuerglied wirkt, welches unmittelbar den Durchlaß schließt und öffnet bzw. verengt und erweitert. Auch braucht dieses Steuerglied nicht zwingend von einer Feder belastet zu sein, so daß die Vorrichtung vollständig ohne Federn auskommt, welche vom Wasser beaufschlagt werden. Das Steuerglied kann ohne Zwischenübersetzung oder Kurvensteuerung unmittelbar mit der Handhabe betätigt werden, beispielsweise wenn diese mit dem Steuerglied gleichlaufend bzw. in gleicher Bewegungsrichtung mitlaufend gekuppelt ist. Bei axialer Steuerbewegung des Steuergliedes wäre dies eine Axialbewegung der Handhabe und bei drehender Bewegung des Steuergliedes eine Drehbewegung.

Unabhängig von der beschriebenen Ausbildung ist der gesamte Durchlaß der Vorrichtung zweckmäßig von metallischen Einbauten aus Stahl oder dgl. frei, so daß solche Teile nicht durch Kontakt mit dem Medium angegriffen werden können. Der gesamte Durchlaß kann von Kunststoffteilen begrenzt sein, so daß auch eine Stellwelle nicht in komplizierter Weise aus Metall hergestellt werden muß.

Unabhängig von den beschriebenen Ausbildungen bildet die Vorrichtung zweckmäßig axial benachbart zu oder hinter mindestens einer bzw. allen Betätigungs-Handhaben einen Klammergriff, welcher mit einer Hand im wesentlichen über den gesamten Umfang umgriffen werden kann, ohne daß die Betätigungsbewegung der jeweiligen Handhabe dadurch behindert wäre. Dieser Griff kann eine einer Handbreite entsprechende Länge haben. Vor der greifenden Hand sind dann mit der anderen Hand alle Handhaben leicht zu betätigen.

Ebenfalls unabhängig von den beschriebenen Ausbildungen kann auch der Sperrkörper der Sperre und/oder die Handhabe der Verriegelung stets im wesentlichen vollständig vor dem genannten Griff liegen, so daß eine sehr kurze Ausbildung der Vorrichtung möglich ist.

Desweiteren ist unabhängig von den beschriebenen Ausbildungen vorgesehen, die Betätigungs-Handhabe für die Steuereinrichtung und/oder für die Sperrung an einem außen liegenden Teil vorzusehen, welcher versenkt in eine Vertiefung an der Außenseite der Vorrichtung eingreift, so daß dieser Handhaben-Körper gegen Beschädigungen geschützt ist. Außerdem kann die Verriegelungs-Handhabe eine Außenweite haben, die etwa gleich der Außenweite des an ihr hinteres Ende anschließenden Abschnittes der Vorrichtung ist, so daß sich verhältnismäßig kontinuierliche Außenflächen ergeben.

Ein Steuer- bzw. Sperrnocken der Sperre kann dünnwandig, beispielsweise als gekrümmter Mantelsteg, ausgebildet sein, so daß bei leichter Bauweise eine sichere Sperrung gewährleistet ist.

Ist der Stellweg der Handhabe ausreichend klein und erstreckt sich ihr manuell zu greifender Teil bei drehbarer Lagerung beiderseits der Vorrichtungs- oder Drehachse, so kann die Handhabe in jeder Stellung vor dem genannten Griff und in mindestens einer oder allen Stellungen hinter der Verriegelungs-Handhabe liegen. Sie braucht dann nicht mehr als um etwa ein Drittel bzw. die Hälfte der Außenweite der Vorrichtung über deren Außenumfang vorstehen. Auch ihre Länge kann so gewählt sein, daß die Handhabe in Ansicht auf ihre Achse in jeder Stellung nach einer oder beiden Seiten nicht über den Außenumfang der Vorrichtung vorsteht. Zweckmäßig liegt die Steuer-Handhabe exzentrisch zu ihrer Achse.

Die Verriegelungs-Handhabe ist vorteilhaft in Entriegelungsstellung unmittelbar gegenüber dem Grundkörper und nicht am Sperrglied anschlagbegrenzt, so daß sie eine große, z.B. ringförmig geschlossene Anschlagfläche aufweisen kann. Außerdem benötigt die Verriegelungs-Handhabe keine Aussparung, in welcher die Welle oder ein anderer Bauteil der Steuereinrichtung und/oder der Sperre aufgenommen werden kann. Vielmehr kann die hintere Endfläche der Verriegelungs-Handhabe durchgehend in einer Ebene liegen. Ein in der Verriegelungsstellung zwischen dieser Endfläche und einer gegenüberliegenden Schulterfläche des Grundkörpers begrenzter Spalt ist zweckmäßig in der Sperr- bzw. Offenstellung der Handhabe bzw. in einer von beiden Endstellungen von der Handhabe oder einem mit dieser fest verbundenen Bauteil überbrückt, so daß der Einstellzustand leicht erkannt werden kann. Außerdem können die ineinandergreifenden Sperrflächen dadurch von außen, nämlich in Ansicht gegen die Handhabe, sichtbar sein.

Der Stellweg des jeweiligen Steuergliedes ist vorteilhaft an beiden Enden anschlagbegrenzt. Der zur Auslösung aller Funktionen erforderliche Stellweg beträgt weniger als 180°, insbesondere 90°. Anhand der querliegenden Handhabe kann dadurch der geschlossene Zustand und anhand der längsliegenden Handhabe der geöffnete Zustand erkannt werden. Für die beiden Steuerglieder könnten auch gesonderte Handhaben vorgesehen sein. Der Anteil des Stellweges vom Beginn der Öffnung der Steuereinrichtung bis zur vollständigen Öffnung des Durchlasses in der Vorrichtung und ggf. im Nippel kann etwa gleich groß wie der anschließende Anteil sein, welcher zu Freigabe der Sperrung dient. Wird das Steuerglied von der Sperr- bzw. Offenstellung bis in die anschließende Freigabe- bzw. Schließstellung überführt, so kann es über diese Endstellung nicht hinausbewegt werden. Wird es zurück in die andere Endstellung, nämlich in die Offen- bzw. Sperrstellung bewegt, so kann es auch darüberhinaus nicht weiterbewegt werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Fig. 1: eine erfindungsgemäße Vorrichtung, teilweise im Axialschnitt und
- Fig. 2: der vordere Teil der Vorrichtung gemäß Fig. 1 in Ansicht von rechts.

Die Vorrichtung 1 erstreckt sich im wesentlichen entlang einer Haupt-Achse 2 und definiert eine quer bzw. rechtwinklig dazu liegende Stell- oder Steuer-Achse 3, welche näher beim vorderen als beim hinteren Ende der Vorrichtung 1 oder von deren Grundkörper 5 liegt und die Achse 2 schneidet. Das Medium, insbesondere Wasser, durchfließt die Vorrichtung 1 vom hinteren zum vorderen Ende in Richtung 4, kann jedoch auch in entgegengesetzter Richtung strömen. Das vordere Ende enthält eine Aufnahme 6 für ein nicht näher dargestelltes Kupplungs-Gegenstück, wie einen Nippel, welcher mit einem Endstutzen in die Endöffnung 6 axial angeschlagen sowie radialspielfrei einzusetzen und mit einer Verriegelung 7 gegen axiales Abziehen so zu sichern ist, daß er trotzdem gegenüber der Vorrichtung 1 um die Achse 2 gedreht werden kann. Das vordere Ende des Grundkörpers 5 ist von einem hülsenförmigen Riegelkörper 8 umgeben, welcher als Verriegelungs-Handhabe am Außenumfang zugänglich und in beiden entgegengesetzten Richtungen anschlagbegrenzt axial bewegbar ist. Durch Zurückziehen des Körpers 8 wird die Verriegelung 7 freigegeben und nach dem Loslassen der Handhabe 8 kehrt diese in ihre Verriegelungsstellung zurück, in welcher ihre vordere Endfläche ebengleich mit der vorderen Endfläche des Grundkörpers 5 liegt.

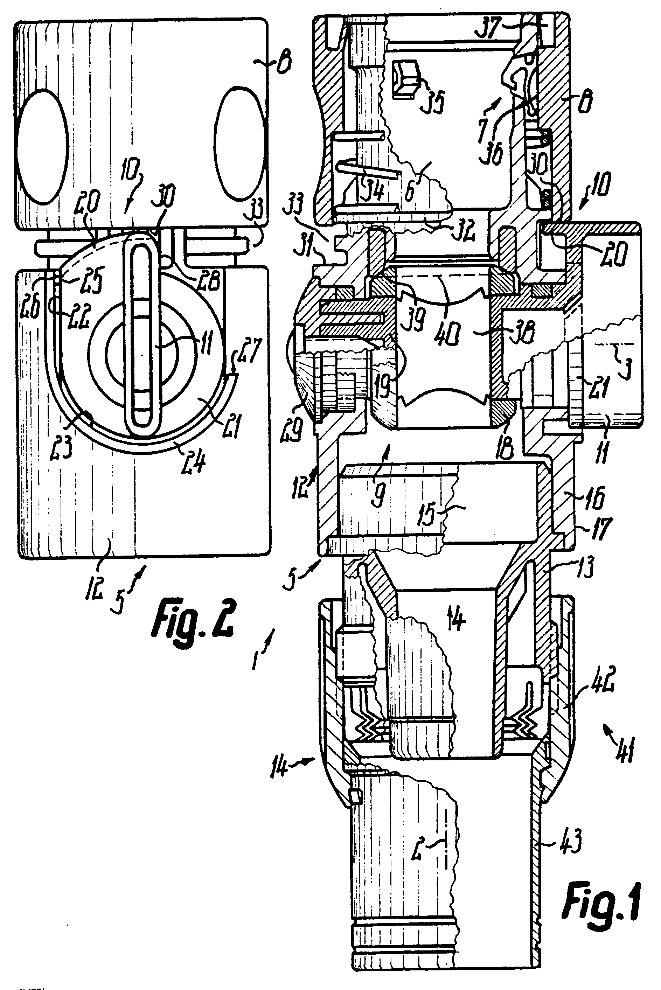

Der von einem Ende zum anderen Ende der Vorrichtung 1 durchgehende Durchlaß 15 der Einheiten 1, 5 ist in seinem Durchlaßquerschnitt mit einer Steuereinrichtung 9 so veränderbar, daß er vollständig geschlossen und geöffnet sowie zur Regulierung in jedem teilgeöffneten Zustand durch Axial- und/oder Radialreibung gesichert werden kann. In der Verriegelungsstellung gemäß Fig. 1 ist die Verriegelung 7 mit einer Sperre 10 formschlüssig gegen Entriegelung so gesichert, daß der Körper 8 nur um ein ganz kleines Maß von weniger als 5 oder 3mm zurückgezogen werden kann. Beide Einrichtungen 9, 10 sind mit einer Handhabe 11 gleichlaufend um die Achse 3 betätigbar, wobei der Drehweg 90° beträgt.

Der Grundkörper 5 weist zwei einteilige, hülsenförmige Körper 12, 13 auf, die in seiner Längsrichtung aneinander schließen. Der hintere Körper 13 enthält außerhalb des Körpers 12 an seinem hinteren Ende eine Vorrichtung 14 zur zugfest klemmenden und abgedichteten Befestigung eines Endes eines flexiblen Schlauches. Das Schlauchende liegt vollständig innerhalb der manuell betätigbaren Vorrichtung 14 und ein Stutzen des Körpers 14 ragt in das Innere des Schlauches als Widerlager gegen die radial nach innen gerichtete Klemmkraft von Klemmbacken hinein. Das vordere, kürzere Ende des Körpers 13 ist in das hintere Ende des Körpers 12 axial und festsitzend eingesetzt. Nur der vordere Körper 12 trägt im Abstand vor dem Körper 13 die Einrichtungen 6 bis 11. Die Achse 3 ist etwa in der Mitte der Länge des Körpers 12 angeordnet und hat von dessen hinteren Ende einen Abstand, welcher größer als ein Viertel oder ein Drittel der Länge des Körpers 12 ist. Die Länge des Körpers 8 kann dadurch kleiner als das 1,5-fache seiner Außenweite oder als diese Außenweite sein.

Der Mantel 16 des Körpers 12 bildet mit seiner Außenseite 17 den freiliegenden Außenumfang der Vorrichtung 1, welcher auf dem größten Teil seiner axialen und Umfangserstreckung wie der des Körpers 8 konstante Weite hat und gleich dem Außenumfang des Körpers 8 ist. Der in das Innere des Körpers 8 hineinragende bzw. diesen Körper 8 durchsetzende Endabschnitt des Körpers 12 ist in der Außenweite entsprechend reduziert. Der Körper 8 ist nur um wenige Millimeter länger als die Aufnahme 6. Mit dem Innenumfang liegt der Mantel 16 zentrierend am Außenumfang des vorderen Endes des Körpers 13 an. Im Anschluß an dieses vordere Ende bildet der Innenumfang des Mantels 16 beiderseits der Einrichtung 9 die Begrenzung des Durchlasses 15.

Unmittelbar benachbart zum Innenumfang des Mantels 6 ist mit Abstand zwischen dessen Enden ein bewegbares Steuerglied 18 der Einrichtung 9, nämlich ein Küken, mit einer Außenfläche vorgesehen, die um die Achse 3 bzw. einen in der Achse 2, 3 liegenden Mittelpunkt sphärisch gekrümmt ist. Das Küken 18 bildet einen quer zu den Achsen 2, 3 bewegbaren Zwischenabschnitt des Durchlasses 15 und liegt dem vorderen Ende des Körpers 13 mit einem Abstand unmittelbar gegenüber, der kleiner als die Hälfte seines Durchmessers ist. Das einteilige Küken 18 ist drehfest, jedoch durch Axialspiel selbstausrichtend mit einem Träger bzw. einer gesonderten Welle 19 verbunden, welche das Küken 18 in einer zu seinem Durchlaß rechtwinkligen und diesen Durchlaß kreuzenden Bohrung radialspielfrei durchsetzt. Diese Bohrung und die Welle 19 sind weiter als der Kükendurchlaß, welcher mit durchgehend konstanter Weite auch die Welle 19 rechtwinklig zur Achse 3 durchsetzt und in der am weitesten geöffneten Stellung gemäß Fig. 1 in der Achse 2 liegt. Die einteilige Welle 19 bildet gleichzeitig ein Sperrglied 20 der Sperre 10, die Handhabe 1 und eine die Basis dieser beiden Glieder 11, 20 bildenden Scheibe 21. Unmittelbar beiderseits des Kükens 18 ist die Welle 19 in Gleitlagern des Mantels 16 um die Achse 3 drehbar sowie abgedichtet so gelagert, daß ihr von der Handhabe 11 entferntes freies Ende nicht über den Umfang 17 vorsteht.

Die Scheibe 21 liegt frei sowie versenkt in der Außenseite 17 und gleitet mit ihrer inneren Stirnfläche an einer die Lageröffnung umgebenden Schulterfläche zur Axialsicherung. Der Außenumfang dieses Gliedes 21 ist über einen Bogenwinkel von mehr als 180° um die Achse 3 kreisförmig. Ein Ende dieses kreisförmigen Abschnittes schließt tangential an eine geradlinige oder ebene Kantenfläche an, deren anderes Ende mit größerem Radialabstand als der konstant kreisförmige Umfang an das Sperrglied 20 anschließt. Das andere Ende des kreisförmigen Umfanges schließt an eine radial nach außen vorspringende Flanke an, deren äußeres Ende ihrerseits an das andere Ende des Sperrgliedes 20 anschließt. Dadurch bildet die Zone 22 einen exzentrischen Nocken und die Scheibe 21 einen über die Kreisfläche vorstehenden Nockenvorsprung, welcher am Ende das steigungsfrei um die Achse 3 gekrümmte Sperrglied 20 enthält. Das Sperrglied 20 erstreckt sich über einen wirksamen Bogenwinkel von weniger als 180 bzw. 90°, insbesondere etwa 45° oder weniger. Dies gilt auch für den wirksamen Bogenwinkel der stumpfwinklig an das Sperrglied 20 anschließenden Freigabefläche 22, wobei dieser Bogenwinkel geringfügig größer als der Bogenwinkel des Sperrgliedes 20 oder als 45° sein kann. Beide Bogenwinkel gemeinsam betragen weniger als 180 oder 120°, insbesondere 90°.

Die Scheibe 21 liegt vollständig versenkt in einer vertieften Aufnahme 23, welche am Innenumfang von einem einteilig mit dem Mantel 16 ausgebildeten Steg 24 begrenzt ist. Die Begrenzung bzw. der Steg sind an den Außenumfang der Scheibe 21 so angepaßt, daß sie in deren Endstellung gemäß den Figuren 1 und 2 an der Fläche 22 parallel zu dieser und im Anschluß daran parallel zum kreisförmigen Umfangsabschnitt der Scheibe 21 liegen. Der Steg 24, dessen Längskantenfläche in einer Ebene mit der äußeren Stirnfläche der Scheibe 21 liegt, hat dadurch im Bereich der gemeinsamen Axialebene der Achsen 2, 3 seine geringste Höhe und nimmt nach beiden Richtung mit zunehmender Entfernung von dieser Axialebene in der Höhe zu. Innerhalb der Begrenzung 24 ist der Außenumfang 17 rechtwinklig zur Achse 3 abgeflacht. Mit Abstand innerhalb der Begrenzung 24 steht von dieser Abflachung nach außen ein die Lagerfläche für die Welle 19 bildender Hülsenvorsprung weniger weit als der Steg 24 vor. An der ringförmigen Endfläche dieses Hülsenvorsprunges gleitet die Scheibe 21 mit ihrer inneren Stirnfläche.

Die Scheibe 21 bildet für jede Endstellung einen Anschlag 25 bzw. 28. Jedem Anschlag ist ein Gegenanschlag 26 bzw. 27 zugeordnet, welcher durch die mit dem Körper 12 einteilige Begrenzung 24 gebildet ist. Der Anschlag 25 für die geöffnete und sperrende Endstellung der bewegbaren Steuereinheit ist durch die Fläche 22 bzw. das zugehörige Ende des Sperrgliedes 20 gebildet. Als Gegenanschlag 26 ist an der Innenseite des zugehörigen Endes des Steges 24 ein Vorsprung vorgesehen. Der Anschlag 28 ist durch die über den kreisförmigen Umfangsabschnitt parallel zur Fläche 22 vorstehende Flanke der Handhabe 11 gebildet. Diese Flanke liegt auf der von der Fläche 22 abgekehrten Seite der Handhabe 11 und schließt unmittelbar an das Sperrglied 20 an.

Die Handhabe 11 ist als in Ansicht langgestreckter Griffsteg ausgebildet, welcher über die äußere Stirnseite der Scheibe 21 vorsteht und zwei parallel beabstandete Flankenwandungen bilden bzw. als langrund geschlossener Steg ausgebildet sein kann. Das eine Ende der Handhabe reicht bis zu dem von der Fläche 22 entfernten Ende der Sperrfläche des Sperrgliedes 20. Das andere Ende steht weniger weit über die Achse 3 vor und reicht bis zum kreisförmigen Umfangsabschnitt der Scheibe 21, der im Anschluß an den Anschlag 28 an die zugehörige Flankenfläche quer anschließt. Als Gegenanschlag 27 für den Anschlag 28 ist die Endkante des gekrümmten Abschnittes des Steges 24 vorgesehen, die gegenüber dessen anderen Ende bzw. gegenüber der zur Achse 2 rechtwinkligen Axialebene der Achse 3 zurückversetzt liegt. In der Stellung gemäß den Figuren 1 und 2 liegt die Handhabe 11 als Zeiger parallel zur Richtung 4 und in der Axialebene 2, 3. In der anderen Endstellung liegt die Handhabe 11 rechtwinklig dazu. In jeder Stellung liegt das Sperrglied 20 vor der zur Achse 2 rechtwinkligen Axialebene der Achse 3 bzw. vor einer dazu parallelen Ebene, in welcher die jeweils hintere Seite der Handhabe 11, 21 liegt.

Zur formschlüssigen Sicherung der einteilig miteinander ausgebildeten Glieder 11, 19 bis 21 gegen Abziehen in Richtung der Handhabe 11 ist an dem anderen, freien Ende der Welle 19 eine Axialsicherung 29 in Form einer Wellen-Endkappe festsitzend angeordnet. Die Wellenkappe greift mit konzentrischen Ringbunden in das Wellenende ein und dient auch zur Axialsicherung bzw. Vorspannung einer an ihr anliegenden Wellendichtung. Die am Umfang 17 zugängliche Kappe 29, die ebenfalls das Sperrglied tragen könnte, ist mit einer axialen Schraube gegenüber dem Wellenende axial verspannt. Ihre Außenweite ist kleiner als die der Scheibe 21 bzw. des Durchmessers, auf welchem das Sperrglied 20 oder dessen Sperrfläche liegt. Anschließend an den Außenumfang des Scheibennockens steht das Sperrglied 20 parallel zur Achse 3 nur über die innere Stirnfläche der Scheibe 21 als stegförmig gekrümmtes Mantelsegment vor. Das Sperrglied 20 umgibt die Welle 19 und den diese aufnehmenden Hülsenvorsprung mit Axialabstand so, daß es annähernd bis an die Ebene der genannten Abflachung reicht. Die Handhabe 11 steht nur in entgegengesetzter Richtung im wesentlichen über die äußere Stirnfläche der Scheibe 21 so vor, daß ihre Wandung im Längsschnitt gemäß Fig. 1 eine axiale Forsetzung des Sperrgliedes 20 bildet. Dessen Sperrfläche ist durch seinen gekrümmten Außenumfang gebildet.

Die Gegen- bzw. Sperrfläche 30 der Verriegelung 7 ist durch die hintere, ringförmige Endfläche des Körpers 8 gebildet, die durchgehend in einer Ebene liegt. Diese Fläche 30 liegt einer ringförmigen, nur im Bereich des Gliedes 20 von der zugehörigen Abflachung des Umfanges 17 unterbrochenen Schulter 31 des Körpers 12 gegenüber. Die Schulter 31 bildet den Übergang zwischen dem Außenumfang 17 und dem reduzierten Endabschnitt des Körpers 12 sowie eine Anschlagfläche für eine Gegenfläche des Körpers 8, die durch die End- und Sperrfläche 30 gebildet ist. Das hintere Ende des Körpers 8 ist mit seinem Innenumfang am Außenumfang einer Führung bzw. eines Ringbundes 32 gleitend geführt, welcher bei Verriegelungsstellung nahezu an das hintere Ende 30 mit seiner hinteren Stirnfläche anschließt und dadurch dieses Ende des Körpers 8 verschließt. In Verriegelungsstellung bilden die hinteren Endflächen des Körpers 8 und des Bundes 32 einerseits sowie die Fläche 31 die Seitenflanken einer ringnutförmigen Vertiefung 33, von deren Bodenfläche ein weiterer Führungsbund für den Innenumfang des Körpers 8 vorstehen kann. Eine Feder 34 zur Rückstellung der Verriegelung 7 in die Verriegelungslage umgibt vollständig innerhalb des hinteren Endes des Körpers 8 den Außenumfang des reduzierten Abschnittes des Körpers 12. Die Schrauben- bzw. Druckfeder 34 ist mit einem Ende an der vorderen Stirnfläche des Bundes 32 und mit dem anderen Ende an einer gegenüberliegenden Innenschulter des Körpers 8 unter permanenter Vorspannung abgestützt. An seinem freien Ende weist der reduzierte Abschnitt des Körpers 12 einen vorstehenden Anschlag oder Ringbund auf, an dem der Körper 8 in der Verriegelungsstellung mit Gegenanschlägen, z.B. mit den Enden von Federzungen, anschlägt.

Die Verriegelung 7 enthält um die Achse 2 im Bereich der Aufnahme 6 verteilt radial bewegliche Riegelnocken 35, welche zwar Kugeln sein können, zweckmäßig jedoch nicht kugelförmig oder seitlich gekrümmt begrenzt sind. Jeder Nocken 35 besteht aus Kunststoff und durchsetzt ein mehr- bzw. rechteckiges Fenster im Mantel des reduzierten Abschnittes des Körpers 12 so, daß er in Verriegelungsstellung in eine entsprechende Ringnut am Außenumfang des Nippels formschlüssig eingreifen kann. Mit seiner radial äußeren Seite liegt der Nocken 35 an einer Gleit- bzw. Sicherungsfläche 36 an, welche unmittelbar im Anschluß an die Feder 34 durch den verengten Innenumfang des Körpers 8 gebildet ist. An das äußere Ende der Riegelsicherung 36 anschließend bildet der Innenumfang des Körpers 8 im Bereich der Anschlagzungen eine erweiterte Freigabezone 37, die beim Zurückziehen des Körpers 8 in den Bereich von Gegennocken der Riegelglieder 35 gelangt. Dadurch können die Nocken 35 soweit radial nach außen aus dem Innenumfang 6 herausweichen, daß der Nippel zum axialen Abziehen freigegeben ist.

Der Durchlaß 38 durch das Küken 18 und die Welle 19 hat permanent durchgehend konstante Querschnitte. Auf der dem vorderen Vorrichtungsende zugekehrten Seite der Achse 3 liegt der sphärische Umfang des Kükens 18 an einem ringförmigen Dichtsitz 39 im Bereich der Ebene der Schulter 31 abgedichtet an. Die am Körper 12 vorgesehene Dichtfläche kann durch die Stirnfläche einer eingesetzten, hülsenförmigen Dichtung gebildet sein. Der Übergang von deren Innenumfang in diese Stirnfläche bildet in der Achse 2 eine Steuerkante 40, durch welche die zugehörige Öffnung des Durchlasses 38 beim Drehen des Kükens 18 stufenlos verengt werden kann, so daß sich je Einheit des Stellweges eine etwa lineare Verengung ergibt. Bei vollständig geöffnetem Durchlaß 38 liegt der Außenumfang des Sperrgliedes 20 mit seinem bei der Handhabe 11 liegenden Ende der Sperrfläche 30 gegenüber, so daß eine Entriegelung der Verriegelung 7 ausgeschlossen ist. Aus dieser Endstellung kann die Handhabe 11 nur in einer Richtung nach rechts gedreht werden, wobei die Sperrung aufrecht erhalten bleibt, jedoch der Durchlaß des Ventiles 18, 40 zunehmend verengt wird. Sobald dieser Durchlaß vollständig geschlossen ist, gelangt das Sperrglied 20 aus dem Bereich der Fläche 30, bis die Flächen 22, 30 parallel zueinander liegen bzw. die Flächen 22, 31 etwa in der selben Ebene ausgerichtet sind. Der Körper 8 kann nun bis zum Anschlag an der Fläche 31 zurückgezogen werden. Der Außenumfang des dem Drehknopf 11, 21 gegenüberliegenden Wellenendes 29 liegt nur mit geringem Abstand benachbart zur Fläche 31 und hat einen gegenüber der Scheibe 21 kleineren Durchmesser. Bei der Drehbewegung ändert sich der Abstand der Handhabe 11, 21 gegenüber dem hinteren Ende der Vorrichtung 1 nicht.

Zwischen ihrem hinteren Ende und der Handhabe bzw. der Aufnahme 23 kann daher die gesamte Vorrichtung einen nach hinten schlanker werdenden Griff 41 bilden, welcher in keiner Stellung von der Handhabe 11 überdeckt wird. An das hintere Ende des Körpers 12 schließt ein hülsenförmiges Spannglied 42 der Befestigung 14 an, welches als Schraubhülse auf ein Außengewinde des Körpers 13 aufgesetzt ist und in Spannlage annähernd bis an das hintere Ende des Umfanges 17 reicht. Die Hülse 42 bildet dann eine annähernd kontinuierliche Fortsetzung des Umfanges 17. Aus dem hinteren Ende der Hülse 22 ragt eine den Schlauch umgebende Schutzhülse 43 heraus, die das hintere Ende des Griffes 41 sowie im Inneren eine konische Steuerfläche für die Spannbacken bildet. Der Griff 41 ist mindestens so lang wie oder länger als die restliche Vorrichtung. Der Radialabstand des Gliedes 20 bzw. der Handhabe 11 von der Achse 3 ist kleiner als der Radius des Umfanges 17. Dadurch ergibt sich eine sehr kompakte Bauweise. Alle angegebenen Wirkungen und Eigenschaften, wie Lagebestimmung, Maße und dgl. können genau wie beschrieben oder nur etwa bzw. im wesentlichen wie beschrieben vorgesehen sein.

Bis auf die Dichtungen und die Federn sind im wesentlichen alle Bauteile formsteif aus Kunststoff o. dgl. hergestellt.

## Patentansprüche

1. Kupplungs-Vorrichtung zur Verbindung von Leitungen für Medien o. dgl., wie Fluid-Leitungen, mit einem Grundkörper (5) zur gekuppelten Aufnahme eines Kupplungs-Gegenstückes, wie eines Nippels, dadurch gekennzeichnet, daß eine Steuereinrichtung (9) zur Veränderung des Durchflusses des Mediums durch einen Durchlaß (15) der Vorrichtung (1) und insbesondere eine mit einer Sperre (10) festzusetzende Verriegelung (7) für das Gegenstück vorgesehen sind, wobei zur Veränderung des Durchflusses bzw. zur Sperrung der Verriegelung (7) mindestens ein Steuerglied (18, 20) vorgesehen und vorzugsweise bei festgesetzter Verriegelung (7) die positive Durchlässigkeit für das Medium mit der Steuereinrichtung (9) im wesentlichen stetig veränderbar und bei Aufrechterhaltung dieser Verriegelung in der jeweiligen Einstellung gesichert ist.

2. Vorrichtung nach Anspruch 1, dadurch gekennzeichnet, daß mehrere Steuerglieder, nämlich ein einen Mediendurchlaß (15, 38) unmittelbar veränderndes Stellglied (18) der Steuereinrichtung (9) und ein Sperrkörper (20) der Sperre (10) als Stelleinheit od. dgl. im wesentlichen gleichartige bzw. etwa parallele Stellbewegungen aufweisen, daß insbesondere der unmittelbar an der Verriegelung (7) angreifende Sperrkörper (20) wenigstens mit einer Welle (19) eine Montage-Baugruppe bildet und daß vorzugsweise das Steuerglied (18) der Steuereinrichtung (9) in einer gekrümmten Bahn bewegbar gelagert ist sowie unmittelbar eine veränderliche Steueröffnung durch seine Bahnbewegung veränderbar begrenzt.

3. Vorrichtung nach einem der vorhergehenden Ansprüche, dadurch gekennzeichnet, daß die Durchlässigkeit für das Medium mit einer Vertiefung im Steuerglied (18) veränderbar ist, welche von aneinander im wesentlichen permanent gleitbar geführten Dichtflächen (39) begrenzt ist, daß insbesondere die Dichtflächen (39) zur Veränderung eines stufenlos veränderbaren Durchlaßquerschnittes gegeneinander drehbar sind und daß vorzugsweise mindestens eine der Dichtflächen (39) sphärisch gekrümmt ist.

4. Vorrichtung nach einem der vorhergehenden Ansprüche, dadurch gekennzeichnet, daß das Steuerglied (18) der Steuereinheit (9) einen Durchlaß (38) für das Medium über dessen Umfang durchgehend begrenzt, daß insbesondere der Durchlaß (38) das Steuerglied (18) diametral durchsetzt und daß vorzugsweise die Dichtflächen (39) an der der Verriegelung (7) zugekehrten Seite des Steuergliedes (18) und gegenüber dem Sperrkörper (20) zurückversetzt liegen.

5. Vorrichtung nach einem der vorhergehenden Ansprüche, dadurch gekennzeichnet, daß das Steuerglied (18) der Steuereinrichtung (9) und der Sperrkörper (20) festsitzend miteinander verbunden sind, daß insbesondere das Steuerglied (18) quer zur Mittelachse (2) des Grundkörpers (5) liegt und daß vorzugsweise der Radialabstand des Sperrkörpers (20) von der Steuerachse (3) des Steuergliedes (18) größer als dessen größte Radialerstreckung gegenüber der Steuerachse (3) ist.

6. Vorrichtung nach einem der vorhergehenden Ansprüche, dadurch gekennzeichnet, daß das Steuerglied (18) der Steuereinrichtung (9) zwischen maximal geöffnetem sowie maximal geschlossenem Durchlaß (15, 38) einen ersten Stellweg und das Steuerglied (20) der Sperre (10) bis zur Entsperrung der Verriegelung (7) einen zweiten Stellweg bestimmt, der an den ersten Stellweg anschließt und gegenüber dessen Hälfte größer bis mindestens so groß ist, daß insbesondere das Steuerglied (18, 20) anschlagbegrenzt bewegbar ist und daß vorzugsweise der Drehwinkel des Steuergliedes (18, 20) höchstens 180° bis 90° beträgt.

7. Vorrichtung nach einem der vorhergehenden Ansprüche, dadurch gekennzeichnet, daß das Steuerglied (20) der Sperre (10) an der Verriegelung (7) nur an der der Verriegelung (7) zugekehrten Seite des Steuergliedez (18) der Steuereinrichtung (9) angreift, daß insbesondere das Sperrglied (20) auf der der Verriegelung (7) zugekehrten Seite der Mittelachse (3) des Steuergliedes (18) der Steuereinrichtung (9) unmittelbar an einem manuell bewegbar am Grundkörper (5) gelagerten Riegelkörper (8) angreift und daß vorzugsweise das Sperrglied (20) in Freigabestellung außerhalb des Bewegungsweges des als Riegelhülse ausgebildeten Riegelkörpers (8) liegt.

8. Vorrichtung nach einem der vorhergehenden Ansprüche, dadurch gekennzeichnet, daß das Steuerglied (20) der Sperre (10) eine annähernd bis mindestens so große Radialerstreckung wie eine Betätigungs-Handhabe (11) aufweist, daß insbesondere das Steuerglied (20) der Sperre (10) eine Fortsetzung einer Außenfläche der Handhabe (11) bildet und daß vorzugsweise das Steuerglied (20) der Sperre (10) entgegengesetzt zu einer Wandung der Handhabe (11) frei vorsteht und/oder unmittelbar an die Außenseite der Handhabe (11) anschließt.

9. Vorrichtung nach einem der vorhergehenden Ansprüche, dadurch gekennzeichnet, daß das Steuerglied (20) der Sperre (10) mit einer Steuerwelle (19), wie einer benachbart zum Durchlaß (38) als Kohlwelle ausgebildeten Steuerwelle (19) gelagert ist, daß insbesondere das Steuerglied (20) der Sperre (10) einteilig mit der Steuerwelle (19) ausgebildet ist und daß vorzugsweise die Steuerwelle (19) das Steuerglied (18) der Steuereinrichtung (9) im Zentrum festsitzend durchsetzt bzw. vom Durchlaß (38) durchsetzt ist.

10. Vorrichtung nach einem der vorhergehenden Ansprüche, dadurch gekennzeichnet, daß der Durchlaß (15, 38) von einem äußersten Innenumfang begrenzt und im Bereich des Steuergliedes (18) der Steuereinrichtung (9) innerhalb dieses Innenumfanges vollständig offen ist, daß insbesondere das Steuerglied (18) der Steuereinrichtung (9) in jeder Stellung gegenüber dem Grundkörper (5) berührungsfrei ist und daß vorzugsweise das Steuerglied (18, 20) mit einem von ihm und von der Handhabe (11) gesonderten Sicherungsglied (29) unmittelbar gegenüber dem Grundkörper (5) axial gesichert ist, das im Abstand von der Verriegelung (10) im Bereich des Außenumfanges am Grundkörper (5) anliegt.

11. Vorrichtung nach einem der vorhergehenden Ansprüche, dadurch gekennzeichnet, daß eine Betätigungs-Handhabe (11) für das Steuerglied (18, 20) versenkt in den Außenumfang des Grundkörpers (5) eingreift, daß insbesondere die Handhabe (11) eine Scheibe (21) umfaßt, welche von einem vom Außenumfang des Grundkörpers abstehenden Steg (24) auf einem Teil ihres Umfanges abgeschirmt ist und daß vorzugsweise der Steg (24) wenigstens einen Anschlag (26, 27) für mindestens eine Endstellung des Steuergliedes (18, 20) bildet.

12. Vorrichtung nach einem der vorhergehenden Ansprüche, dadurch gekennzeichnet, daß das hintere Ende der Vorrichtung (1) einen Haltegriff (41) zum Festhalten der Vorrichtung (1) beim Betätigen der Verriegelung (7), der Steuereinrichtung (9) und der Sperre (10) bildet, daß insbesondere die Handhabe (11) den Griff (41) in keiner Stellung überdeckt und daß vorzugsweise der annähernd bis zur Handhabe (11) reichende formsteife Griff (41) mindestens so lang wie die Hälfte der Länge der Vorrichtung (1) ist.
